# EUROPÄISCHE PATENTSCHRIFT

(11) **EP 2 064 298 B1**
(45) Veröffentlichungstag und Bekanntmachung des Hinweises auf die Patenterteilung: **20.10.2010**
(21) Anmeldenummer: 07803380.0
(22) Anmeldetag: 10.09.2007
(51) Int. Cl.: C09J 5/08, B65D 83/14, C09J 175/04, C09K 3/30

(54) **VERFAHREN ZUR DURCHFÜHRUNG EINER VERKLEBUNG**
GLUING METHOD
PROCÉDÉ DE COLLAGE

(30) Priorität: 12.09.2006 DE 102006043545; 31.07.2007 DE 102007036330
(43) Veröffentlichungstag der Anmeldung: 03.06.2009
(60) Teilanmeldung: 10166264.1
(73) Patentinhaber: Tremco Illbruck Productie B.V., 4241 WC Arkel (NL)
(72) Erfinder: COPPUS, Stefan, 4817 TR Breda (NL); VAN HERPEN, Goselinus Jan, 3371 CX Hardinxveld-Giessendam (NL)
(74) Vertreter: Müller, Enno
(86) Internationale Anmeldenummer: PCT/EP2007/059463
(87) Internationale Veröffentlichungsnummer: WO 2008/031791

(56) Entgegenhaltungen:
- DE-A1- 19 629 153
- US-A- 3 362 862
- US-A- 5 951 796

## Beschreibung

Die Erfindung betrifft zunächst ein Verfahren zur Durchführung einer Verklebung mittels PU-Dosenschaum.

Derartige PU-Schäume, wie sie gemäß dem Verfahren zur Verklebung benutzt sind, sind zunächst in Form von Polyurethan-Dosenschäumen, die in der Regel aus sog. Aerosolbehältern ausgebracht werden, in vielfältiger Hinsicht bekannt. Grundsätzlich wird etwa auf die EP-A1 42 128 und die EP-A2 152 761 verwiesen. Darüber hinaus können derartige Schäume aber auch aus sonstigen Behältnissen, wie etwa aus Tuben oder Töpfen, ausgegeben werden, gegebenenfalls dann mit einem -etwa auf einem Topf- aufgebrachten Sprüh-Ausgabekopf, wenn, was nicht notwendig erforderlich ist, der Schaum in dem Topf auch unter Druck steht oder unter Druck gesetzt wird zur Ausgabe.

Aus der US 5 951 796 A ist es bekannt, eine schaumige Flüssigkeit aufzutragen, die nach dem Auftragen zunächst aufschäumt, unter Bildung einer Schaumraupe. Der Schaum wird unter Zerstörung von Schaumstellen zusammengedrückt, wenn der zu verklebende Gegenstand in Kontakt mit dem Schaum gebracht wird. Aus der DE 196 29 153 A1 ist es bekannt, eine Beschleunigerlösung aus Wasser und Katalysator für das Beschleunigen eines Klebeverfahrens, in dem PU-Schaum verwendet wird, aufzubringen. Ausgangspunkt ist eine pastöse Masse, die durch Zugabe von Wasser aufschäumt. In die so erreichte Verschäumung wird dann der zu verklebende Gegenstand eingedrückt.

Ausgehend von dem vorbeschriebenen Stand der Technik beschäftigt sich die Erfindung mit der Aufgabe, auf Basis eines PU-Schaumes ein vorteilhaftes Klebeverfahren anzugeben. Diese Aufgabe ist beim Gegenstand des Anspruches 1 gelöst, wobei wesentlich ist, dass der PU-Schaum zunächst in Form einer Schaumraupe auf einen Klebeuntergrund aufgetragen wird und sodann in Sich zusammenfällt bis auf die gewünschte Dicke einer Klebeschicht im Bereich von 0,1 bis 2 mm, wobei weiter die Einstellung des PU-Schaumes so gewählt wird, dass sich eine Abbindung innerhalb von 0,5 bis 30 Minuten ab Auftrag der Schaumraupe ergibt.

Es ist erkannt worden, dass bei entsprechender Einstellung des PU-Schaumes so, dass er relativ rasch zerfällt, durch Aufbringen einer PU-Schaumraupe auf einen Klebeuntergrund auch eine Klebeschicht erzeugt werden kann. Nämlich dann, wenn der PU-Schaum nach einer gewissen Zeit praktisch so weit zerfallen ist, dass nur noch die Klebeschicht verbleibt. Bei der im Anspruch angegebenen Einstellung ist einerseits noch eine genügend lange Zeitspanne gegeben, dass das zu verklebende Teil nach einem ersten Aufbringen noch verschoben oder zurechtgerückt werden kann. Zum anderen ist die Zeitspanne aber auch so günstig, dass durch einfaches Andrücken so lange zugewartet werden kann, bis die Verklebung vollständig erfolgt ist. Die angegebene zahlenmäßige Bandbreite der Abbindungs-Zeitspanne schließt auch, soweit nicht im Folgenden ohnehin schon exemplarisch angegeben, sämtliche Zwischenwerte ein, und zwar insbesondere in Ein-Zehntel-Schritten, so also auch eine Abbindung innerhalb von 0,6 Minuten (36 Sekunden) bis 30 Minuten oder 0,5 Minute bis 29 9/10 Minuten (30 Sekunden bis 1794 Sekunden) usw. Dies bedeutet in 1/10-Schritten von der unteren Grenze (0,5 Minuten) / oder der oberen Grenze auf die jeweils andere Grenze hin eingeschränkt. "Und" steht hierbei dafür, dass beide Grenzen um jeweils 1 oder mehrere Zehntel auf die andere Grenze hin verschoben, d.h. eingeengt werden. Ein insbesondere bevorzugter Bereich ist hierbei wiederum der Bereich von einer Minute bis 8 Minuten.

Besonders bevorzugt ist, dass auf das zu verklebende Teil vor dem Andrücken auf den Klebeuntergrund bzw. auf die Klebeschicht ein Beschleunigungsmittel auf Wasserbasis aufgebracht wird. Hierbei macht man sich zu nutze, dass die Abbindereaktion des Polyurethan-Schaumstoffes bzw. des bereits zerfallenen Schaumstoffes, also der erzeugten Polyurethan-Schicht, mit Wasserzugabe beschleunigt verläuft. Insbesondere ist bevorzugt, dass das Beschleunigungsmittel auf das zu verklebende Teil aufgesprüht wird. Das Beschleunigungsmittel kann 90% oder mehr Wasser enthalten. In die damit gegebene prozentuale Bandbreite sind auch alle Zwischenwerte eingeschlossen, und zwar insbesondere in 1/10%-Schritten, also 90,1% oder mehr, 90,2% oder mehr usw.

Auch ist bevorzugt, dass das Beschleunigungsmittel einen Katalysator enthält. Als Katalysator können hier insbesondere die an sich bekannten PU-Katalysatoren eingesetzt sein. Vorzugsweise Katalysatoren mit primären oder sekundären OH-Gruppen. Beispielsweise der unter dem Handelsnamen Niax A1 bekannte Katalysator. Auch können amine-, tin- (Zinn-) oder salt- (Salz-) - basierte Katalysatoren zum Einsatz kommen. Beispielsweise die unter den Kurzbezeichnungen DMDEE, DBTL oder LB-Katalysator bekannten Katalysatoren. Jeder der genannten Katalysatoren kann für sich zum Einsatz kommen oder als Zusammensetzung oder Mischung mit einem der anderen Katalysatoren.

Auch ist bevorzugt, dass das Beschleunigungsmittel einen Kettenverlängerer (chain-extender) enthält. Als Kettenverlängerer kommen in Betracht vorzugsweise kurzkettige Diole und Triole wie etwa Ethylenglykol, Propandiol, Propanglycerol, Butandiol, Hexaneglycol und andere. Jeder dieser Kettenverlängerer kann einzeln eingesetzt sein oder in einer Zusammensetzung bzw. Mischung mit einem, mehreren oder allen der genannten weiteren Kettenverlängerer. Dies im Hinblick auf eine gewünschte Modifikation der Viskosität und/oder der Flexibilität des ausgebrachten Produktes.

Die Verklebung kann mittels eines Verklebungs-Sets durchgeführt werden. Dieses Verklebungs-Set besteht aus einem Polyurethanschaumstoff-Behälter, bspw. Polyurethanschaumstoff-Dose, insoweit insbesondere Aerosol-Dose, und einer ein Klebe-Beschleunigungsmittel enthaltenden Flüssigkeitsauftragseinrichtung. Die Flüssigkeitsauftrageinrichtung kann insbesondere eine an sich handelsübliche Hand-Sprühdose, also ein Behältnis mit aufgesetzter Triggerpumpe sein. Solche Triggerpumpen sind vielfältig im Stand der Technik bekannt. Lediglich beispielhaft wird auf die DE 199 48 462 A1 verwiesen. Es kann sich auch um eine Aerosol-Dose handeln, mit der die Flüssigkeit aufgebracht wird oder eine industrielle Aerosol-Spritzvorrichtung.

Der Polyurethanschaum kann insbesondere Polyole in einem Anteil von 15 bis 30 Gew% aufweisen, einen Weichmacher (softener) im Bereich von 0 bis 20%, einen Katalysator (catalyst) im Bereich von 0 bis 7,5%, Stabilisierungselemente oder eine Mischung aus Stabilisierern, die auch eine Zellöffnungseigenschaft aufweisen, im Bereich von 0 bis 5%. Die angegebenen zahlenmäßigen Bandbreiten schließen auch sämtliche Zwischenwerte ein, und zwar insbesondere in 1/10%-Schritten, also etwa hinsichtlich der Polyole einen Anteil (auch) von 15,1% bis 30% oder 15 % bis 20,9%; weiter 15,2% bis 30 Gew.% oder 15,2% bis 29,8% usw., gleiches gilt hinsichtlich des Weichmachers und/oder Katalysators und/oder der Stabilisierungselemente oder der Mischung aus Stabilisierern.

Als Polyole kommen insbesondere in Betracht die verschiedensten, Hydroxylgruppen aufweisenden Komponenten. Bevorzugte Hydroxylgruppen aufweisende Komponenten sind Polyether- und/ oder Polyester-Polyole mit einem Moleculargewicht in der Bandbreite von 200 bis 3000g/ mol. Jedes dieser Polyole kann als solches genutzt sein oder in einer Zusammensetzung bzw. Mischung mit einem anderen Polyol. Dies wieder im Hinblick auf eine gewünschte Einstellung der Viskosität und/oder Flexibilität des ausgebrachten Produktes. Die angegebene zahlenmäßige Bandbreite hinsichtlich des Molekulargewichtes der Hydroxylgruppen aufweisenden Komponenten schließt auch alle Zwischenwerte ein, bevorzugt in 1 Gramm-Schritten, also 201 g bis 3.000 g, 200 g bis 1.999 g, 201 g bis 2.999 g, 202 g bis 3.000 g usw.

Als Weichmacher können Paraffinöle und Derivate hiervon eingesetzt werden Derivate sind beispielsweise Chlorparaffin, auch kurz als CP's bezeichnet. Weiter Produkte deren bekannte Kurzbezeichnungen TCPP, TEP und TCEP sind. Darüber hinaus können auch inaktive Polyole, beispielsweise Polyole mit einer sterisch gehinderten OH-Gruppe, eingesetzt werden. Jeder dieser Weichmacher kann alleine zur Anwendung kommen oder in einer Mischung mit einem der anderen Weichmacher, dies wiederum unter dem Aspekt, das ausgebrachte Produkt hinsichtlich Viskosität oder Flexibilität in der gewünschten Weise zu modifizieren. Als Katalysator können hier insbesondere die an sich bekannten PU-Katalysatoren eingesetzt sein. Vorzugsweise Katalysatoren mit primären oder sekundären OH-Gruppen. Beispielsweise der unter dem Handelsnamen Niax A1 bekannte Katalysator. Auch können amine-, tin- oder salt-basierte Katalysatoren zum Einsatz kommen. Beispielsweise die unter den Kurzbezeichnungen DMDEE, DBTL oder LB-Katalysator bekannten Katalysatoren. Jeder der genannten Katalysatoren kann für sich zum Einsatz kommen oder als Zusammensetzung oder Mischung mit einem der anderen Katalysatoren.

Als Stabilisierungselemente kommen die üblicherweise verwendeten siliconbasierten Stabilisierungselemente zur Anwendung, wie etwa das unter dem Handelsnamen Niax SR 234 bekannte Stabilisierungselement und/ oder organisch basierte Stabilisierungselemente. Diese Stabilisierungselemente können wiederum alleine oder in einer Mischung benutzt werden, wie dies im Hinblick auf das ausgebrachte Produkt und dessen Eigenschaften gegebenenfalls gewünscht ist.

Weiter kann der PU-Schaumstoff MDI (Difenylmethandiisozyanat) im Anteil von 30 bis 70 Gew% aufweisen. Schließlich ein Treibmittel im Bereich von 10 bis 25%. Die angegebene zahlenmäßige Bandbreite schließt auch sämtliche Zwischenwerte ein, und zwar insbesondere in 1/10%-Schritten, also Anteile von 30,1 bis 70%, 30,1 bis 69,9%, 30 bis 69,9%, 30,2 bis 70% usw., in gleicher Weise auch bezüglich des Treibmittels.

Hinsichtlich des Beschleunigungsmittels ist bevorzugt, dass dieses vorwiegend aus Wasser besteht, zu 0 bis 95%. Weiter, dass es ein kurzkettiges Diol enthält, zu 0 bis 25%, bevorzugt 0 bis 10%, wobei hier insbesondere auch die Prozentzahlen 8, 9, 11 und 12 eingeschlossen sind, und einen Katalysator auch im Bereich von 0 bis 10%. Darüber hinaus schließt die angegebene zahlenmäßige Bandbreite der Prozentzahlen auch die Zwischenwerte ein, die nicht exemplarisch angegeben sind, und zwar insbesondere die Zwischenwerte in 1/10%-Schritten, also 0,1 bis 25% bzw. 0 bis 94,9% bzw. 0,2 bis 95% bzw. 0 bis 94,8% bzw. 0,2 bis 94,8% usw., in gleicher Weise auch bezüglich der für das kurzkettige Diol bzw. den Katalysator angegebenen prozentualen Spanne. Als Katalysator können hier insbesondere die an sich bekannten PU-Katalysatoren eingesetzt sein. Vorzugsweise Katalysatoren mit primären oder sekundären OH-Gruppen. Beispielsweise der unter dem Handelsnamen Niax A1 bekannte Katalysator. Auch können amine-, tin- oder salt-basierte Katalysatoren zum Einsatz kommen. Beispielsweise die unter den Kurzbezeichnungen DMDEE, DBTL oder LB-Katalysator bekannten Katalysatoren. Jeder der genannten Katalysatoren kann für sich zum Einsatz kommen oder als Zusammensetzung oder Mischung mit einem der anderen Katalysatoren.

Das hier beschriebene Verfahren ist grundsätzlich zur Verklebung allgemein geeignet, insbesondere aber auch im Baubereich. Hier weiter insbesondere zur Verklebung von Steinen, Holz, Aluminium und sonstigen Metallen. Dabei sind Verklebungen von Steinen mit Aluminium und/oder Holz bzw. allen sonstigen Kombinationen mit eingeschlossen, einschließlich natürlich der Verklebung von Steinen mit Steinen, Holz mit Holz, Aluminium mit Aluminium usw.

Nachstehend ist die Erfindung anhand der beigefügten Zeichnung, die jedoch lediglich ein Ausführungsbeispiel darstellt, näher erläutert. Hierbei zeigt:
Fig. 1 das Aufbringen einer Schaumraupe auf einen Klebeuntergrund;
Fig. 2 die zu einer Klebeschicht zerfallene Schaumraupe;
Fig. 3 das Besprühen eines zu verklebenden Teils mit einem Klebebeschleuniger; und
Fig. 4 das auf den Klebeuntergrund verklebte Teil.

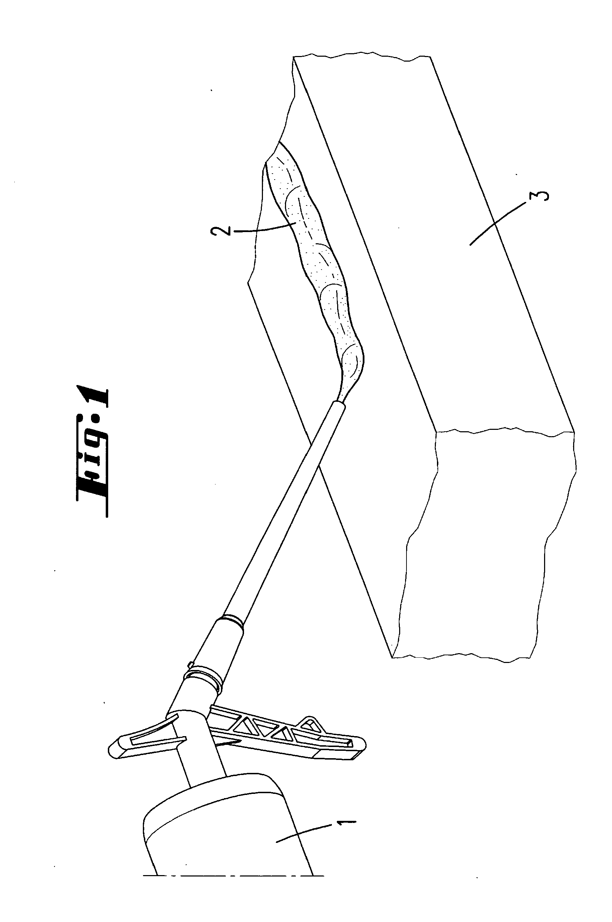

Dargestellt und beschrieben ist, zunächst mit Bezug zu Figur 1, eine Sprühdose (Aerosol-Dose) 1, aus welcher Polyurethanschaumstoff in Form einer Schaumraupe 2 auf einen Klebeuntergrund 3 aufgebracht wird.

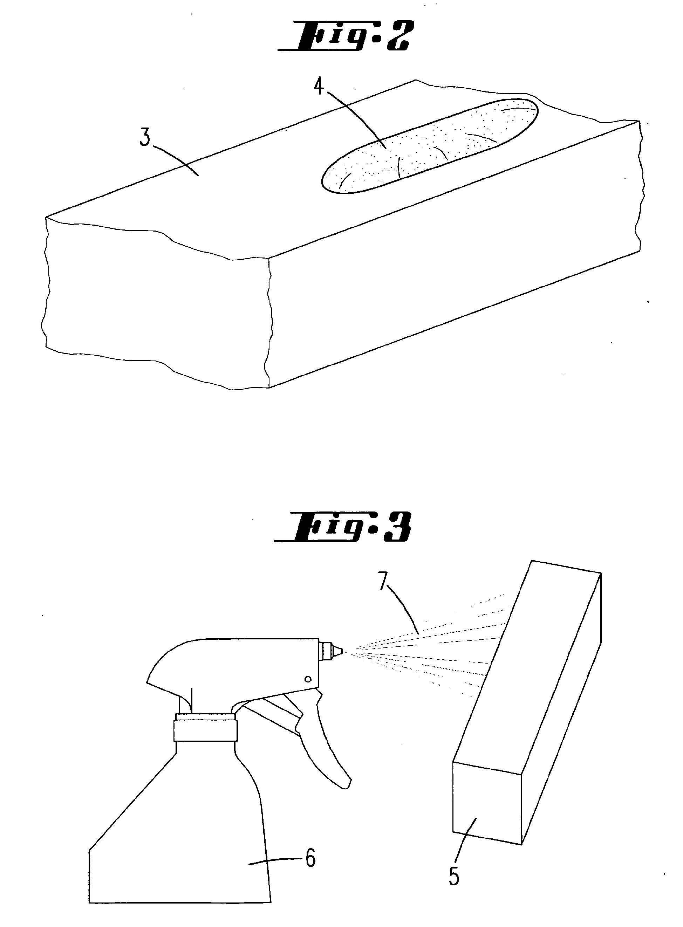

Der Polyurethanschaumstoff ist so eingestellt, dass er relativ rasch zerfällt, derart, dass eine Klebeschicht 4 verbleibt, siehe Fig. 2. Die Klebeschicht 4 hat keine schaumige Konsistenz mehr, sondern eine gleichsam honigartige. Die Zahl der Lufteinschlüsse ist deutlich reduziert. Andererseits entstehen auch in der Kleberaupe -bis eine endgültige Abbindung eingetreten ist- noch neue Luftblasen. Diese Luftblasen können dann kugelartig, bspw. halbkugelartig, aus der Klebeschicht vorstehen, dies jedenfalls betreffend eine Kleberaupe, auf welche kein zu verklebendes Gegenstück aufgebracht ist, die man also entgegen üblicher Benutzung frei ausreagieren lässt. Im verklebten Zustand, wenn mittels dieser Kleberaupe zwei Bauteile miteinander verklebt sind, können sich diese Luftblasen naturgemäß nicht über die eigentliche Klebeschicht hinaus erheben.

Im einzelnen können pro Zentimeter Länge einer bspw. 1 cm breiten und 0,2 mm dicken Klebeschicht 4 noch zwischen 0 und 200 Luftblasen verbleiben, mit einem Durchmesser zwischen 0,01 bis hin zu 2 mm, teilweise auch größer (soweit die genannte Dicke der Klebeschicht übersteigend, bezogen auf den unverklebten Zustand).

Die genannten Zahlenbereiche, 0 bis 200 bzw. 0,01 bis 2 mm, schließen auch sämtliche Zwischenwerte ein, und zwar in Bezug auf die Luftblasen in 1-Schritte (1 bis 200 Luftblasen oder 0 bis 199 Luftblasen oder 1 bis 199 Luftblasen, dann 2 bis 200 Luftblasen, 0 bis 198 Luftblasen und 2 bis 198 Luftblasen etc.) bzw. hinsichtlich der Durchmesser in 0,01 mm-Schritten und im übrigen in gleicher Variation, wie vorstehend bezüglich der Anzahl der Luftblasen erläutert (0,01 bis 0,19 mm, 0,02 bis 0,2 mm, 0,01 bis 1,9 mm etc.).

Dadurch, dass bei in üblicher Weise zur Verklebung zusammengesetzten Bauteilen die genannten Luftblasen in der zerfallenen Schaumstoffraupe, also der verbleibenden Kleberaupe, sich nicht entfalten können, bleibt es bei der vorteilhaft dünnen eigentlichen Klebeschicht.

Das rasche Zerfallen der Schaumstoffraupe ist erreicht durch eine geeignete Kombination der bekannten Stabilisierungselemente und Destabilisierungselemente. Als Stabilisierungselemente werden silikon-basierte Stabilisierungselemente, wie bereits das erwähnte, unter dem Handelsnamen Niax-SR 234 bekannte Stabilisierungselement, eingesetzt und organisch basierte Stabilisierungselemente können ebenfalls verwendet werden. Als Destabilisierungselemente können Zellöffner verwendet werden wie das unter dem Handelsnamen Ortegol 501 bekannte Destabilisierungselement. Des gleichen aber auch organische Polymere und paraffinische Öle. Jedes der genannten Stabilisierungselemente und Zellöffnermittel kann für sich genutzt sein oder in einer Mischung mit einem der weiteren möglichen Stabilisierungselemente oder Zellöffner. Dies wieder im Hinblick auf die Einstellung des ausgebrachten Produktes.

Diese Klebeschicht 4 hat den Vorteil, dass sie eine sehr gleichmäßige Dicke über ihre Breite und Länge aufweist, beispielsweise eine Dicke im Bereich von 0,1 bis 2 mm, bevorzugt 0,2 bis 0,5 mm oder 1 bis 2 mm. Hierbei sind in die angegebenen zahlenmäßige Bandbreiten auch, soweit nicht ohnehin exemplarisch angegeben, sämtliche Zwischenwerte eingegossen, und zwar insbesondere in 1/10 Schritten, so also betreffend die Dicke von 0,1 bis 1,9 mm oder 0,2 bis 2 mm oder 0,2 bis 2 mm oder 0,2 bis 1,8 mm usw.; weiter auch im Hinblick auf die bereits angegebenen Zwischenwerte 0,2 bis 0,4 mm bzw. 0,3 bis 0,5 mm oder 1 bis 1,9 mm oder 1,1 bis 2 mm oder 1,2 bis 2 mm usw.

Gemäß Figur 3 wird ein zu verklebendes Teil 5 mit in einem Sprühdosenbehältnis 6 befindlichem Beschleunigungsmittel 7, wie weiter vorne auch im Einzelnen beschrieben, besprüht.

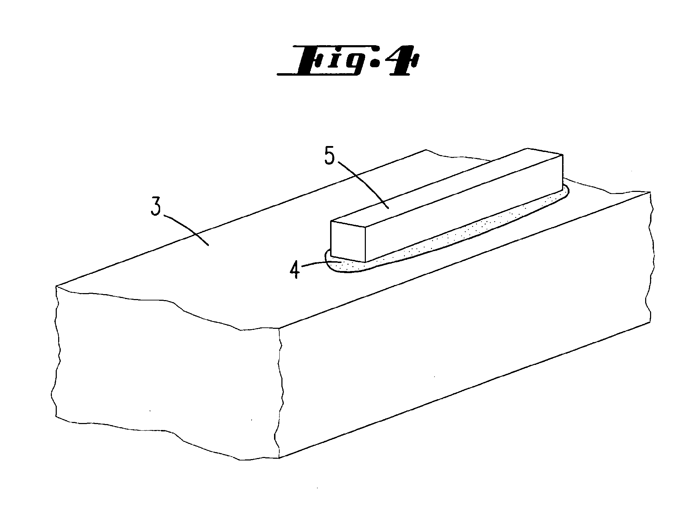

Das so besprühte Teil wird dann gemäß Figur 4 auf den Klebeuntergrund aufgesetzt. Aufgrund der besonderen Einstellung des Schaumstoffes ergibt sich eine Abbindung des PU-Klebstoffes innerhalb von 1 bis 8 Minuten.

Weiter werden folgende Beispiele angegeben:

| Zerfallender Schaum | | | |
|---|---|---|---|
| | Gew.% | Gew.% | Gew.% |
| | Schnell | Langsam | Mittlerer Wert |
| Polyol | 18,4 | 23,2 | 21,5 |
| Weichmacher | 13,3 | 9,67 | 11,54 |
| Katalysator | 5 | 0,1 | 0,5 |
| Kettenverlängerer | 0,26 | 0,45 | 0,4 |
| Anti-Schaummittel | 0,04 | 0,08 | 0,06 |
| Isocyanat | 48 | 51,5 | 51 |
| Treibmittel | 15 | 15 | 15 |
| | | | |
| Abbindezeit (Min.) | 0,5 | 25 | 9 |

Beispiel für Beschleunigungsmittel:

| PU Beschleunigungsmittel | Gew.% | Gew.% | Gew.% |
|---|---|---|---|
| Wasser | 5 | 90 | 50 |
| Kettenverlängerer | 90 | 5 | 20 |
| Katalysator | 5 | 5 | 30 |

Aus den angegebenen Beispielen wird hinsichtlich des zerfallenen Schaumes je nach Anwendung vom Anwender die von ihm bevorzugte Einstellung, sei es schnell, langsam oder mittel, gewählt.

Hinsichtlich des Beschleunigers ist die ca. 90% Wasser enthaltende Mischung eine übliche Mischung.

Weiter kann hinsichtlich des zerfallenen Schaumes noch in größerer Bandbreite Folgendes angegeben werden, wobei die Zahlen sich wiederum jeweils auf Gewichtsprozente beziehen:

| | |
|---|---|
| Polyol | 15 bis 45 |
| Weichmacher | 0 bis 20 |
| Katalysator | 0,1 bis 10 |
| Kettenverlängerer | 0,1 bis 10 |
| Anti-Schaummittel | 0,1 bis 2 |
| Isocyanat | 30 bis 60 und |
| Treibmittel | 10 bis 40. |

Die angegebenen zahlenmäßige Bandbreiten schließen auch hierbei wieder sämtliche Zwischenwerte ein, und zwar insbesondere in 1/10 Schritten, so wie vorstehend bereits mehrfach angegeben.

Hinsichtlich des Beschleunigers ergeben sich folgende bevorzugte Bandbreiten:

| | |
|---|---|
| Wasser | 5 bis 98% |
| Katalysator | 1 bis 30% |
| Kettenverlängerer | 1 bis 90%. |

Auch hierbei schließen die angegebenen Bandbreiten wiederum sämtliche Zwischenwerte ein, und zwar insbesondere in 1/10 Schritten, in der Weise, wie dies vorstehend schon mehrfach erläutert ist.

## Patentansprüche

1. Verfahren zur Durchführung einer Verklebung mittels PU-Dosenschaum, der Anti-Schaummittel enthält, wobei zur Ausbildung einer Klebeschicht der PU-Schaum zunächst in Form einer Schaumraupe auf einen Klebeuntergrund aufgetragen wird und sodann in sich zusammenfällt, so dass praktisch nur eine gewünschte Klebeschicht verbleibt, mit einer Dicke im Bereich von 0,1 bis 2 mm, wonach ein zu verklebendes Teil auf den Klebeuntergrund bzw. die Klebeschicht zur Verklebung gedrückt wird, wobei weiter die Einstellung des PU-Schaums so gewählt wird, dass sich eine Abbindung innerhalb von 0,5 bis 30 Minuten, bevorzugt 1 bis 8 Minuten ab Auftrag der Schaumraupe ergibt.

2. Verfahren nach Anspruch 1, **dadurch gekennzeichnet, dass** der PU-Dosenschaum in einem Aerosolbehälter enthalten ist.

3. Verfahren nach einem der Ansprüche 1 oder 2, **dadurch gekennzeichnet, dass** auf das zu verklebende Teil vor dem Andrücken auf den Klebeuntergrund bzw. die Klebeschicht ein Beschleunigungsmittel auf Wasserbasis aufgebracht wird.

4. Verfahren nach Anspruch 3, **dadurch gekennzeichnet, dass** das Beschleunigungsmittel auf das zu verklebende Teil aufgesprüht wird.

5. Verfahren nach einem der Ansprüche 3 oder 4, **dadurch gekennzeichnet, dass** das Beschleunigungsmittel einen Katalysator enthält.

6. Verfahren nach einem der Ansprüche 3 bis 5, **dadurch gekennzeichnet, dass** das Beschleunigungsmittel einen Kettenverlängerer (chain-extender) enthält.

## Claims

1. Method for carrying out a gluing operation using a PU foam which contains an anti-foaming agent, the PU foam, in order to form an adhesive layer, being applied initially to an adhesion base in the form of a foam bead and then deflating so that practically only a desired layer of adhesive remains that has a thickness in the range from 0.1 to 2 mm, whereupon a part that is to be glued is pressed onto the adhesion base or the adhesive layer, for the gluing action, the formulation of the PU foam being furthermore selected so that setting occurs within 0.5 to 30 minutes, preferably 1 to 8 minutes, from the application of the foam bead.

2. Method according to Claim 1, **characterised in that** the canned PU foam is in an aerosol container.

3. Method according to either of Claims 1 and 2, **characterised in that** an accelerant based on water is applied to the part to be glued before the pressing-on onto the adhesion base or the adhesive layer.

4. Method according to Claim 3, **characterised in that** the accelerant is sprayed onto the part to be glued.

5. Method according to Claim 3 or Claim 4, **characterised in that** the accelerant contains a catalyst.

6. Method according to any of Claims 3 to 5, **characterised in that** the accelerant contains a chain extender.

## Revendications

1. Procédé pour réaliser un collage au moyen d'une mousse PU conditionnée qui contient un agent antimoussant, selon lequel pour former une couche adhésive, la mousse PU est tout d'abord appliquée sur un support de collage sous la forme d'un cordon de mousse et s'affaisse ensuite, de sorte qu'il ne reste pratiquement qu'une couche adhésive souhaitée, d'une épaisseur de l'ordre de 0,1 à 2 mm, à la suite de quoi une partie à coller est pressée sur le support de collage ou la couche adhésive pour réaliser le collage, l'ajustement de la mousse PU étant en outre choisi pour qu'il en résulte un durcissement dans un délai de 0,5 à 30 minutes, de préférence de 1 à 8 minutes après application du cordon de mousse.

2. Procédé selon la revendication 1, **caractérisé en ce que** la mousse PU conditionnée est contenue dans un récipient aérosol.

3. Procédé selon une quelconque des revendications 1 ou 2, **caractérisé en ce qu'**un agent accélérateur à base aqueuse est appliqué sur la partie à coller avant de la presser sur le support de collage ou la couche adhésive.

4. Procédé selon la revendication 3, **caractérisé en ce que** l'agent accélérateur est pulvérisé sur la partie à coller.

5. Procédé selon une quelconque des revendications 3 ou 4, **caractérisé en ce que** l'agent accélérateur contient un catalyseur.

6. Procédé selon une quelconque des revendications 3 à 5, **caractérisé en ce que** l'agent accélérateur contient un prolongateur de chaîne (chain-extender).
